# EUROPEAN PATENT SPECIFICATION

(11) **EP 3 588 870 B1**
(45) Date of publication and mention of the grant of the patent: **05.05.2021**
(21) Application number: 18179615.2
(22) Date of filing: 25.06.2018
(51) Int. Cl.: H04L 12/701

(54) **SELECTIVE ROUTING OF DATA OF AN M2M-ENABLED DEVICE IN A MOBILE COMMUNICATION NETWORK**
SELEKTIVES ROUTING VON DATEN EINER M2M-FÄHIGEN VORRICHTUNG IN EINEM MOBILKOMMUNIKATIONSNETZWERK
ACHEMINEMENT SÉLECTIF DE DONNÉES D'UN DISPOSITIF M2M DANS UN RÉSEAU DE COMMUNICATION MOBILE

(43) Date of publication of application: 01.01.2020
(73) Proprietor: Vodafone GmbH, 40549 Düsseldorf (DE)
(72) Inventor: Gehlen, Guido, 41462 Neuss (DE); Hoefflin, Thomas, 79379 Müllheim (DE); Eßer, Michael, 40547 Düsseldorf (DE)
(74) Representative: Eisenführ Speiser

(56) References cited:
- EP-A1- 2 890 073
- US-A1- 2013 305 345

## Description

### DESCRIPTION OF PRIOR ART

The invention relates to a routing of data in a mobile communication network. More specifically, the invention is related to a mobile communication network for routing data, a method for establishing a data connection data via a mobile communication network and to a computer program for performing the method.

Mobile communication networks are often used for machine-to-machine (M2M) communication between M2M devices and M2M service centers processing the data provided the M2M devices (which are sometimes also referred to as loT (Internet of Things) devides). In addition, M2M devices are known which are capable of forwarding and receiving user data via the mobile communication device. Examples of such M2M devices include mobile communication device integrated into vehicles, such as cars, which are enabled for communication with a telematics service center and which are also enabled for establishing a user data communication with a data network over the mobile communication network. In this respect, the devices may particularly allow for being connected to a further user device (which may not be enabled for accessing the mobile communication network) and may forward data from such a device to a data network via the mobile communication network and vice versa.

Mobile communication networks may provide dedicated gateway servers for routing data of M2M devices to the associated M2M service centers, and usually the complete data traffic of the M2M devices is routed via these gateway servers. As a consequence, also the user data are routed to the M2M service centers. The M2M service centers may then forward the user data to the data network and may forward user data received from the data network to the mobile communication device. However, in order to access to this service, the user of the M2M device typically has to subscribe to this service with the M2M service provider operating the M2M service center and has to pay a related fee to the M2M service provider. This is cumbersome for the user and may result in additional costs, particularly in case the user already has an account in the mobile communication network which allows for accessing the data service provided in the mobile communication network, e.g. with another mobile communication device of the user.

EP 2 890 073 A1 relates to the establishment of a secure end-to-end communication channel between an M2M device and a consumer application executed in a user device through an M2M server. The M2M device is connected to the M2M server via an access network directly or through an M2M gateway. In order to establish the secure communication channel, the consumer application authenticates to an M2M authorization server, which returns credentials comprising an access token to the consumer application upon a successful authentication. Further, the consumer application sends the access token to the M2M server, which checks the access token and verifies whether the consumer application is a valid one. If the verification is successful, the M2M server requests session keys from the M2M authorization server, which are used for establishing a secure session between the consumer application and the M2M server in order to enable access to the resources of the M2M device connected to the M2M Server.

US 2013/0305345 relates to a secure domain name system (DNS) for machine-to-machine communication. The system includes a global DNS registry database storing policy information for machine-to-machine communication. From the database, the policy information to a machine DNS registry server located in an Internet service provider network and a control signaling gateway located in this network utilizes the policy information to allow only registered controllers associated with a machine to communication with the machine.

In view of this, it is an object of the present invention to allow for a more flexible routing of data of a mobile communication device supporting data communication in several categories, particularly including M2M data communication and user data communication.

### SUMMARY

The invention is carried out as described in the appended claims.

### DESCRIPTION

In accordance with one aspect, the invention describes a mobile communication network for routing data of at least one mobile communication device of a user supporting data communication in at least two categories of data, a first category of data comprising machine-to-machine data and a second category of data comprising user data. The mobile communication network comprises a first gateway server configured to establish a data connection for transmitting data between the mobile communication device and a machine-to-machine service center, and a second gateway server configured to establish a data connection for transmitting data between the mobile communication device and a data network . The mobile communication network further comprises a proxy server configured to receive from the mobile communication device a request for establishing a data connection for transmitting data and to check whether the mobile communication device belongs to a predetermined group of mobile communication devices. The proxy server is configured to determine whether the data comprises data of the first or second category and to forward the request to the first gateway server in case it is determined that the data comprises data of the first category or to the second gateway server in case it is determined that the data comprises data of the second category, if the proxy server has determined that the mobile communication device belongs to the predetermined group of mobile communication devices. Moreover, the proxy server is configured to forward the request to the first gateway server independent of the category of the data, if the proxy server has determined that the mobile communication device does not belong the predetermined group. Upon receipt of the connection request, the first or second gateway server may establish a data connection for transmitting the data of the mobile communication device. The data network particularly comprises the Internet.

The proxy server allows for establishing a data connection for the mobile communication via the first or second gateway server in dependence of the category of the data to be transmitted via the data connection, if the mobile communication device belongs to a predetermined group. Hereby, the data of the mobile communication device can be routed more flexibly in the mobile communication network.

The predetermined group of mobile communication devices may comprise mobile communication devices associated with at least two accounts of the mobile communication network. Each account may be associated with a user or organization having a subscription to the services of the mobile communication network. For each account, the mobile communication network stores account information specifying parameters indicating how the services of the mobile communication network are to be performed for the user or organization.

The association of the mobile communication devices of the predetermined of the predetermined group with two accounts allows for performing services under different accounts, particularly in dependence on the category of data forwarded by the mobile communication network in accordance with the services. This also includes that accounting can be made separately for the holders of the different accounts within the mobile communication network.

In a related embodiment of the invention, the at least two accounts of the mobile communication network comprise an account of a user of the mobile communication device and an account associated with the machine-to-machine service center. The latter account may be held by an operator of the machine-to-machine service center. In this embodiment, machine-to-machine data can be routed in a conventional way under the account associated with the machine-to-machine service center. At the same time, the user can utilize the mobile communication device for accessing services of the mobile communication network for routing user data and these user data can be routed under the account of the user.

In a further embodiment of the invention, the proxy server is configured to determine whether the data comprises data of the first or second category on the basis of an access point name included in the request. The access point name may be associated with the data by the mobile communication device. In this respect, the mobile communication device may comprise a first application for processing machine-to-machine data and this application may use a first access point name. Moreover, the mobile communication device may comprise a second application for processing user data and this application may use a second access point name. The respective access point name may be included in the request for establishing a data connection for transmitting the data in dependence of the data category of the data to be exchanged via the data connection.

The user of the mobile communication device may already have an account in the mobile communication network associated with a further mobile communication unit of the user, where the further mobile communication unit may be a further mobile communication device which does not necessarily have to support data communication in the at least two categories. The mobile communication device supporting the machine-to-machine data communication may additionally be associated with this account. In this respect, one embodiment of the invention comprises that the mobile communication network is configured to transmit a code word to the mobile communication unit of the user for input into the mobile communication device and to associate the mobile communication device with the account of the user upon receipt of the code word from the mobile communication device. This embodiment allows for an especially secure and easy association of the mobile communication device with the account of the user.

The mobile communication network may comprise several subnetworks and the first and the second gateway servers may be included in different subnetworks. Further, the second gateway server may be configured to establish data connections only for mobile communication devices having a local subscriber identification, i.e. a subscriber identification associated with the subnetwork including the second gateway server. However, the mobile communication device supporting the machine-to-machine data communication may not have such a local subscriber identification. Therefore, one embodiment of the invention includes that request includes a non-local subscriber identification of the mobile communication device not associated with a subnetwork including the second gateway server that the proxy server is configured to translate the non-local subscriber identification of the mobile communication device into a local subscriber identification of the mobile communication device associated with the subnetwork including the second gateway server when the proxy server forwards the request to the second gateway server. Thus, no adaption of the second gateway server is necessary, if it is configured in the aforementioned way.

In one embodiment of the invention, the mobile communication device is integrated into a vehicle and the machine-to-machine data particularly comprise telematics data. In a further embodiment of the invention, the mobile communication device is configured to be connected to a user device and to receive the user data from the user device. Thus, the mobile communication device allows the user device to access data services of the mobile communication network without having to connect the user device with the mobile communication network directly.

In addition to the mobile communication network, the invention provides a system comprising the mobile communication network and further comprising the mobile communication device.

In accordance with a further aspect, the invention describes a method for establishing a data connection for at least one mobile communication device of a user via a mobile communication network, the mobile communication device supporting data communication in at least two categories, a first category comprising machine-to-machine data and a second category comprising user data. The mobile communication network comprises a first gateway server configured to establish a data connection for transmitting data between the mobile communication device and a machine-to-machine service center, and a second gateway server configured to establish a data connection for transmitting data between the mobile communication device and a data network. The method comprises: (i) receiving a request for establishing a data connection for transmitting data in a proxy server, (ii) the proxy server checking whether the mobile communication device belongs to a predetermined group of mobile communication devices, (iii) the proxy server further determining whether the data comprises data of the first or to the second category, and (iv) the proxy server forwarding the request to the first gateway server in case it is determined that the data comprises data of the first category or to the second gateway server in case it is determined that the data comprises data of the second category, if the proxy server has determined that the mobile communication device belongs to the predetermined group of mobile communication devices. Moreover, the proxy server forwards the request to the first gateway server independent of the category of the data, if the proxy server has determined that the mobile communication device does not belong to the predetermined group.

Moreover, the invention suggests a computer program comprising program code for instructing a computer device to perform the method when the program code is executed in the computer device. The computer device may particularly correspond to the proxy server.

The aforementioned and other aspects of the invention will be apparent from and elucidated with reference to the embodiments described hereinafter.

In the following drawings:
Fig. 1 schematically and exemplarily illustrates components of a mobile communication network connected to a mobile communication device, to an M2M service center and to a data network,
Fig. 2 schematically and exemplarily illustrates steps of a procedure for associating the mobile communication device with an account of a user, and
Fig. 3 schematically and exemplarily illustrates steps for establishing a data connection between the mobile communication device and the M2M service or the data network via the mobile communication network.

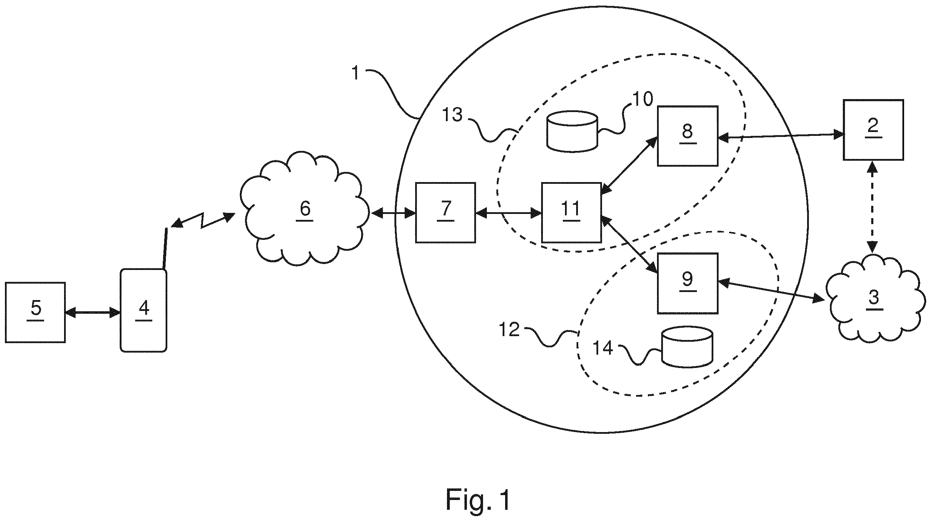

Figure 1 schematically and exemplarily illustrates components of a mobile communication system comprising a mobile communication network 1 which is connected to an M2M service center 2 and to a data network 3, where the data network 3 may be a public data network, such as the Internet. Further, a mobile communication device 4 of a user can connect to the mobile communication network 1, where the mobile communication device 4 supports M2M data communication and user data communication. In the M2M data communication, M2M data are exchanged between the mobile communication device 2 and the M2M service center 4 via the mobile communication network 1. In the user data communication, the mobile communication device 4 exchanges user data with the data network 3 via the mobile communication network 1.

In one embodiment, M2M data may be generated in the mobile communication device 4. However, this may not be the case for the user data. Rather, the mobile communication device 4 may be configured to forward user data, which are exchanged between the data network 3 and a further user device 5. For this purpose, the mobile communication device 4 may be enabled to establish a local wired or wireless connection with the further device 5. An exemplary wireless connection may be established using a wireless local area network (WLAN). In this example, the mobile communication device 4 may particularly be operated as a wireless access point to which the further user device 5 connects.

Thus, the mobile communication device 4 makes it possible for the further user device 5 to exchange data with the data network 3 via the mobile communication network 1 without having to register the further user device 5 in the mobile communication network. This is particularly advantageous in case the further user device 5 is not capable of connecting to the mobile communication network 1. Examples of such further user devices 5 include portable devices, such as tablet computers which are not equipped for accessing the mobile communication network 1. In a further example, the further user device 5 may be a portable device which is equipped for accessing the mobile communication network 1, but the user prefers to establish the connection to the data network via the mobile communication device 4.

In one implementation, the mobile communication device 4 may be configured as a telematics unit integrated into a vehicle, particularly a car. In this implementation, the mobile communication device 4 may comprise one or more functions for exchanging M2M data with the M2M service center 2, which may be configured as a telematics service center. For example, the functions may collect vehicle data and transmit these vehicle data to the M2M service center 2 and/or may receive data for use by vehicle units from the M2M service center 2 and forward such data to the respective vehicle units. For instance, a related vehicle unit may be a navigation unit integrated into the car and the data may include traffic information, which may be used by the navigation unit in routing the vehicle.

By connecting the mobile communication device 4 to a further user device 5 as explained above in this implementation, it is possible to use the further user device 1 in the vehicle so to access the data network 3 via the mobile communication device 4 and the mobile communication network 1 if the further user device 5 itself is not equipped for accessing the mobile communication network 1 or if the user prefers to establish the connection via the mobile communication device 4.

In the mobile communication device 4, M2M data are generated and processed by an M2M application and the user data are processed by a user data application. The M2M application may collect M2M data and control the transmission of such data to the M2M service center and may receive M2M data from the M2M service center, as explained above. The user data application may forward user data received from the further user device 5 to the data network 3 via the mobile communication network 1 and may forward user data for the further device 5 received from the data network 3 via the mobile communication network 1 to the further user device 5.

Data of the M2M application and data of the user data application may be associated with a predetermined Access Point Name (APN) in the mobile communication device 4. Thus, the data of the M2M application is associated with a first predetermined APN, which is also denoted as APN1 hereinafter, and data of the user data application is associated with a different second predetermined APN, which is also denoted as APN2 hereinafter. The APN indicates whether the associated data transmitted to the mobile communication network 1 by the mobile communication device 4 are to be routed to the M2M service center 2 or to the data network 3. As will be explained in more detail herein below, the APN may particularly be included in a connection request for establishing a data connection for exchanging data with the M2M service center 2 or the data network 3.

Further, in order to identify the mobile communication device 4 in the mobile communication network 1, a subscriber identification may be allocated to the mobile communication device 4. The subscriber identification may particularly be configured as an International Mobile Subscriber Identity (IMSI). In the mobile communication device 4, the subscriber identification may be stored in a subscriber identification module which may be inserted into the mobile communication device 4 and may provide functions for accessing the mobile communication network 1 as known to a person skilled in the art. In particular, the subscriber identification module may be configured as a subscriber identity module (SIM) according to the 3GPP (3^{rd} Generation Partnership Project) specifications comprising a USIM (Universal SIM) application.

The mobile communication device 4 connects to the mobile communication network 1 through a radio access network 6. In exemplary implementations, the radio access network 6 may be configured as 2G, 3G or 4G radio access network according to the 3GPP specifications. In the mobile communication network 1, connections of the mobile communication device 4 to the M2M service center 2 and the data network 3 are established through a routing server 7. The routing server 7 may be configured as a Serving Gateway (S-GW) according to the 3GPP specifications.

For connecting the mobile communication network 1 to the M2M service center 2 and to the data network 3, the mobile communication network 1 further comprises a first gateway server 8 and a second gateway server 9, where the first gateway server 8 is the connection point between the mobile communication network 1 and the M2M service center 2 and the second gateway server 9 is the connection point between mobile communication network 1 and the data network 3. Via the first gateway server 8, a packet data connection can be established between the mobile communication device 4 and the M2M service center 2 so that data relating to the packet data connection, which are received from the mobile communication device 4, are forwarded to the M2M service center 2 and data relating to the packet connection, which are received from the M2M service center 2, are forwarded to the mobile communication device 4. Via the second gateway server 9, a packet data connection can be established between the mobile communication device 4 and the data network 3 so that data relating to the packet data connection, which are received from the mobile communication device 4 are forwarded to the data network 3 and data relating to the packet connection, which are received from the data network 3 are forwarded to the mobile communication device 4.

The mobile communication network 1 may include two or more interconnected subnetworks. Each subnetwork may form the core network of one mobile communication operator or a separated portion of the core network of a mobile communication provider. In an examplary configuration, the second gateway server 9 may be included in one subnetwork 12 and the first gateway server 8 may be included in a further subnetwork 13 of the mobile communication network 1. In particular, the first gateway server 8 may be included in a subnetwork 13 only providing data services to M2M devices, and the subnetwork 12 including the second gateway server 9 may provide mobile services - including a data service for accessing the data network 3 - to "normal" mobile communication devices (i.e. communication devices which are not M2M devices). The routing server 7 may be included in one of these subnetworks, or in a further, third subnetwork of the mobile communication network 1 (not shown in the figures).

The first gateway server 8 may exclusively route data of mobile communication devices including an M2M application associated with the M2M service center 2. The second gateway server 9 may also route data of such mobile communication devices as will be described herein below. Moreover, the second gateway server 9 may route data of other mobile communication devices which do not support M2M data communication with the M2M service center 2. In case the second gateway server 9 is included in a separate subnetwork 12, the second gateway server 9 may particularly route data of local mobile communication devices, i.e. mobile communication devices which are associated with a subscriber account of the subnetwork 12. In addition, the second gateway server 9 may route data of non-local (e.g. roaming) mobile communication devices, which are associated with a subscriber account in another subnetwork of the mobile communication network 1. However, in case the subnetwork 12 including the second gateway server 9 has a so-called home-routing configuration, data of non-local mobile communication devices are forwarded to their home networks and the home networks may route the data of such mobile communication devices to the data network 3, where the home network of a mobile communication device corresponds to the subnetwork comprising a subscriber account to which the mobile communication device is associated.

In addition, also the M2M service center 2 may be connected to the data network 3 and may be configured to route data of certain mobile communication devices to the data network and vice versa. These devices include mobile communication devices which include an M2M application associated with the M2M service center and which are not allowed to access services of the second gateway server 2 as will be explained herein below.

The mobile communication network 1 further comprises at least one subscriber database server 10, which stores account information of subscriber accounts of the mobile communication network 1 and which may particularly be configured as a Home Subscriber Server (HSS) according to the 3GPP specifications. For each account, the account information may identify the mobile communication device(s) associated with the account. In particular, the account information may include the subscriber identification(s) of the mobile communication device(s) associated with the account. Moreover, the account information may specify the services of the mobile communication network 1, which the associated mobile communication device(s) is/are allowed to access. For each service, the account information may further include parameters specifying how the respective service is to be executed for the subscriber holding the account and how the service is charged. In this respect, the account information may particularly include tariff information specifying, for example, a maximum amount of data that can be downloaded to and/or uploaded from the associated mobile device(s) with a high quality of service during an accounting interval (where the quality of service may be reduced when the downloaded and/or uploaded amount of data exceeds the maximum amount).

With respect to the M2M data communication, the mobile communication device 4 is associated with a special subscriber account, which may be held by the M2M service provider operating the M2M service center 2. In particular, this account may provide special tariff conditions. Moreover, data communications may exclusively be routed via the first gateway server 8 to the M2M service center 2 under this account. Access to other services provided by the mobile communication network 1 may not be allowed under this account.

In case the mobile communication network 1 comprises several subnetworks, each subnetwork may dispose of a subscriber database server storing account information of mobile communication devices associated with the respective subnetwork. In this case, the subscriber database 10 storing the special subscriber account for the mobile communication device 4 may be included in the subnetwork 13 comprising the first gateway server 8, for example. However, it is likewise possible that the subscriber database 10 including the special subscriber account is included in a further subnetwork which may route data to the subnetwork 13 comprising the first gateway server 8. The subnetwork 12 including the second gateway server 9 may comprise a further subscriber database server 14 storing account information for mobile communication devices associated with the subnetwork 12.

Moreover, the association of mobile communication devices with subnetworks of the mobile communication network 1 may also be reflected in the subscriber identifications allocated to the mobile communication devices. As it is particularly the case for the IMSI, the subscriber identification may include a portion that identifies the network comprising the subscriber account associated with the mobile communication device 4. Thus, a "normal" mobile communication device associated with a subscriber account in the subnetwork 12 has a subscriber identification including an identification of the subnetwork 12. Similarly, the mobile communication device 4 may have a subscriber identification associated with a further subnetwork of the mobile communication network 1, particularly the subnetwork 13 including the first gateways server 8.

Conventionally, the mobile communication device 4 would exclusively be associated with the special subscriber account of the M2M service provider. As a consequence, all data of the mobile communication device 4 - including the user data - would be routed via the first gateway server 8. The M2M service center 2 would then forward the user data received from the mobile communication device 4 to the data network 3 and would forward user data received from the data network 3 to the mobile communication device 4. In order to access this service, the user of the mobile communication device 4 would typically have to subscribe to this service with the M2M service provider and would have to pay a related fee to the M2M service provider.

In order to avoid this, the mobile communication network 1 allows for associating the mobile communication device 4 with a subscriber account of its user in addition to the association with the special account of the M2M service provider. As a result of the association, the subscriber identification of the mobile communication device 4 may particularly be stored in the account information of the subscriber account of the user so that the mobile communication device 4 and data of the device can be linked to the subscriber account of the user. The association may particularly relate to the user data communication.

The mobile communication device 4 may be the only device associated with the subscriber account of the user. Likewise, further mobile communication devices of the user may be associated with the account of the user. In this case, the tariff conditions of the subscriber account of the user may specify an overall maximum data volume that can be downloaded to and/or uploaded from all devices associated with the account with a high quality of service. Thus, the user can flexibly "spend" the maximum data volume using his devices including the mobile communication devices and does not have to book an individual data volume for each device.

Upon having associated the mobile communication device 4 with the subscriber account, the user data of the mobile communication device 4 are routed by the second gateway 9 of the mobile communication network 1 and the routing is made in accordance with account information of the subscriber account of the user. This particularly means that the routing is done under the tariff conditions of the subscriber account of the user.

In case the mobile communication network 1 is subdivided into several subnetworks, the subscriber account may be included in the subnetwork 12 comprising the second gateway server 9. Thus, the account information of the subscriber account may be stored in the subscriber database server 14 of the subnetwork 12 and may include account information relating to the mobile communication device 4. This account information may include the subscriber identification of the mobile communication device 4 to indicate that the mobile communication device 1 is associated with the subscriber account and may include information indicating which mobile services can be accessed using the mobile communication device 4 and rules specifying how these mobile services are provided to the mobile communication device 4. These services particularly include a data service for routing user data between mobile communication device 4 and the data network 3. When this service is accessed using the mobile communication device 4 the same rules may apply as in case the service is accessed using another device associated with the subscriber account of the user.

In addition, the special subscriber account included in the subscriber database server 10 may include an indication that the mobile communication device 4 is additionally associated with a subscriber account of the user. The indication may also specify the subscriber account and the subscriber database server including the subscriber account. This indication allows for determining that the mobile communication device 4 is associated with the subscriber account by querying the account information included in the special subscriber account in the subscriber database server 10.

In order to associate the mobile communication device 4 with the subscriber account of the user, any suitable process may be applied. When the user has a further mobile communication device associated with his subscriber account, this further mobile communication device may be used in this process in order to make the association particularly easy for the user and in order to verify that the mobile communication device 4 is associated with the account of the user who owns the further mobile communication device.

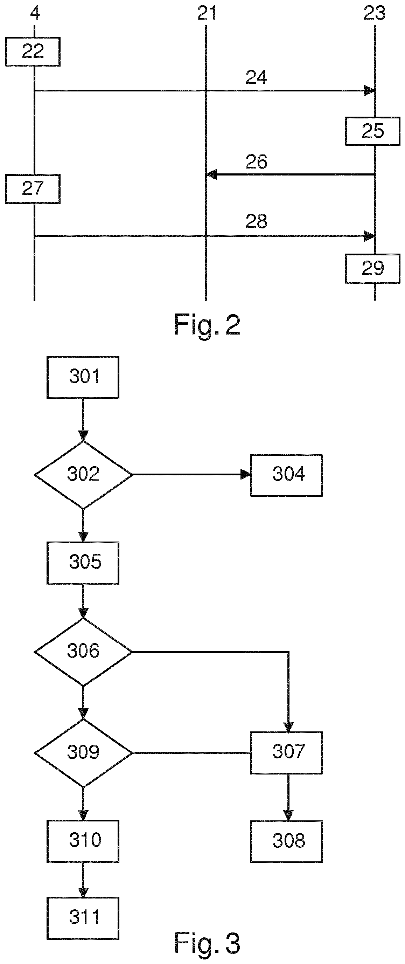

A related exemplary procedure, which is schematically illustrated in Fig. 2, may be performed using an association application included in the mobile communication device 4. Under the control of this application, the mobile communication device 4 may prompt the user to enter the MSISDN (Mobile Station Integrated Services Digital Network Number) allocated to his further mobile communication device 21 and the user may enter the MSISDN at the mobile communication device 4 (step 22). Under the control of the association application, the mobile communication device 4 may then send a message including the MSISDN and requesting an association to a subscriber account to an association unit 23 of the mobile communication network 1 (step 24). In a variant of the procedure, the message is not sent by the mobile communication device 4 but by another device, such as the further mobile communication device 21 of the user.

Upon receipt of the message, the association unit 23 identifies the subscriber account of the user based on the MSISDN received with the message. This is possible because the MSISDN allocated to the further mobile communication device 21 of the user is likewise included in the account information of the subscriber account of the user. Further, the association unit 23 generates a code word (step 25), which is stored in the association unit 23 and transmitted to the further mobile communication device 21 of the user in a related message (step 26). The message may be addressed to the further mobile communication device 21 of the user using the MSISDN received in the association unit 23 in the message sent by the mobile communication device 4.

Upon receipt of the message in the further mobile communication device 21 of the user, the user reads the code word and enters the code word at the mobile communication device 4 (step 27). The association application of the mobile communication device 4 receives the entered code word and sends a message including the code word to the association application. In order to identify the mobile communication device 4 as the sender of this message, the message may include the subscriber identification of the mobile communication device 4.

When the association unit 23 has received the message, the association unit 23 compares the code word included therein with the previously generated code word. If both code words match, the association unit 23 associates the mobile communication device 4 with the subscriber account of the user, which has previously been identified on the basis of the MSISDN of the further mobile communication device 21. For this purpose, the association unit may particularly include the subscriber identification of the mobile communication device 4 received in the aforementioned message into the account information of the subscriber account of the user.

In order to enable a routing of user data of the mobile communication device 4 to the data network 13 by the second gateway server 9 in accordance with account information of the subscriber account of the user, the mobile communication network 1 comprises a proxy server 11, which is connected with the routing server 7 as well as with the first and second gateway servers 8 and 9. In case the mobile communication network 1 comprises several subnetworks, the proxy server 11 may be included in the subnetwork 13 also comprising the first gateway server 8. However, it is likewise possible that the proxy server 11 is included in another subnetwork. For instance, if the special subscriber account comprising the account information for the mobile communication device 4 is included in a further subnetwork routing data to the subnetwork 13 including the first gateway server, the proxy server 11 may likewise be included in the further subnetwork.

In the following, the related routing of user data transmitted by the mobile communication device 4 is explained in more detail.

In order to exchange data between the mobile communication device 4 and the M2M service center 2 or the data network 3, a packet data connection is established between the mobile communication device 4 and the M2M service center 2 or the data network 3. Once a packet data connection is established between the mobile communication device 4 and the M2M service center 2 or the data network 3, data packets relating to this packet data connection can be transmitted via the packet data connection. In order to exchange data with both the M2M service center 2 and the data network 3, the mobile communication device 4 may establish one packet data connection to each destination - i.e. to the M2M service center 2 and the data network 2. Such packet data connections can also exist simultaneously.

Making reference to Fig 3, one embodiment of the process for establishing a packet data connection between the mobile communication device 4 and the M2M service center 2 or the data network 3 will now be explained in more detail:
In order to establish a packet data connection to the M2M service center 2 or the data network 3, the mobile communication device 4 transmits a connection request to the mobile communication network 1. The connection request includes the APN associated with the data to be exchanged via the packet data connection. Thus, if a packet data connection to the M2M service center 2 is to be established in order to exchange M2M data with the M2M service center, the connection request includes the access point name APN1. If a packet data connection to the data network 3 is to be established in order to exchange user data with the data network 3, the connection request includes the access point name APN2. In addition, the connection request may include the subscriber identification of the mobile communication device 4.

In the mobile communication network 1, the connection request is received in the routing server 7 (step 301). The routing server 7 checks whether the connection request is received from a mobile communication device including an M2M application associated with the M2M service center 2 (step 302). This may be done by checking whether the subscriber identification of the mobile communication device 4 is associated with the special account of the M2M service provider. In case of a mobile communication device not including an M2M application associated with the M2M service center 2, this would not be the case and the packet data connection would be established in the conventional way known to a person skilled in the art (step 303).

If the routing server 7 determines that the mobile communication device 4 is associated with the special account of the M2M service provider, the routing server 7 may forward the connection request to the proxy server 11 (step 305). In the proxy server 11, it may be checked whether the connection request relates to an establishment of a packet data connection to the M2M service center 2 or to the data network 3 (step 306). This may be done on the basis of the APN included in the connection request as explained above. If the proxy server determines that the connection request relates to an establishment of a packet data connection to the M2M service center 2 - this is the case if the connection request specifies the APN1 - it may forward the connection request to the first gateway server 8 (step 307).

Upon receipt of the request in the first gateway server 8, a packet data connection may be established between the mobile communication device 4 and the M2M service center 2 via the first gateway server 8 and via the proxy server 11.

If the proxy server determines in step 306 that the connection request relates to an establishment of a packet data connection to the data network 3 - this is the case if the connection request specifies the APN2 - the proxy server 11 may check whether the mobile communication device 4 is associated with a subscriber account of a user in addition to the association with the special account of the M2M service provider (step 309). In case the mobile communication network 1 includes a single subscriber database server 10, this may be done by checking in the subscriber database server 10 whether the mobile communication device 4 is associated with a subscriber account included in the subscriber database server 10. If the mobile communication network 1 includes several subnetworks having their own subscriber database servers (including the subscriber database server 14 of the subnetwork 12), the proxy server 11 may query these subscriber database servers in order to check whether they include account information relating to the mobile communication device 4. As an alternative, in case the special subscriber account stored in the subscriber database server 10 includes a corresponding indication if the mobile communication device 4 is associated with a subscriber account of its user, the proxy server 10 may check whether this indication is present in order to determine whether the mobile communication device 4 is associated with such a subscriber account.

If the proxy server 11 would determine in step 30 that the mobile communication device 4 is not associated with the subscriber account of its user, it would forward the connection request to the first gateway server. Thereupon, a packet data connection would be established between the mobile communication device 4 and the M2M service center 2 via the first gateway server 8 and via the proxy server 11. As said above, the M2M service center 2 may then route data from the mobile communication device 4 to the data network 3 and vice versa.

In case the proxy server determines in step 309 that the mobile communication device 4 is associated with a subscriber account of its user, the proxy server 11 may forward the connection request to the second gateway server 9 (step 310). If the mobile communication network 1 is subdivided into several subnetworks, the proxy server 11 may particularly select the gateway server of the home network of the subscriber (i.e. the subnetwork to which the subscriber accounts relates) for routing the user data. In the exemplary configuration shown in Fig. 1, this is the gateway server 9 included in the subnetwork 12. Upon receipt of the connection request in the second gateway server 9, a packet data connection between the mobile communication device 4 and the data network 3 may be established via the second gateway server 9 and the proxy server 11. This packet data connection is established in accordance with the account information included in the subscriber account of the user, which may be retrieved by the second gateway server 9 using the subscriber identification of the mobile communication device 4 included in the connection request forwarded to the second gateway server 9.

In a variant of the aforementioned procedure, the steps 306 and the steps 310 are interchanged. Thus, the proxy server may check at first whether the mobile communication device 4 is associated with a subscriber account of its user in addition to the association with the special account of the M2M service provider. If the proxy server 11 would determine that this is not the case, it would forward the connection request to the first gateway server 8 and the packet data connection would be established via the first gateway server 8 independent of the APN specified in the connection request.

If the proxy server 11 determines that the mobile communication device 4 is associated with a subscriber account of its user in addition to the association with the special account of the M2M service provider, the proxy server 11 may then check whether the connection request relates to an establishment of a packet data connection to the M2M service center 2 or to the data network 3. In case the proxy server determines that the connection relates to an establishment of a packet data connection to the M2M service center 2, it forwards the connection request to the first gateway server 8 and a packet data connection between the mobile communication device 4 and the M2M service center 2 is established via the first gateway server 8 and the proxy server 11. If the proxy server 11 determines that the connection relates to an establishment of a packet data connection to the data network 3, it forwards the connection request to the second gateway server 9 and a packet data connection between the mobile communication device 4 and the M2M service center 2 is established via the second gateway server 9 and the proxy server 11 as described above.

Once a packet data connection is established to the M2M service center 2 via the proxy server 11 and the first gateway server 8, M2M data can be transmitted from the mobile communication device 4 to the M2M service center 2 and vice versa. Similarly, once the packet data connection established to the data network via the proxy server 11 and second gateway server 9, user data can be transmitted from the mobile communication device 4 to the data network 3 and vice versa. The respective data - i.e. M2M data or user data - are provided with an identification of the packet data connection to be used for transmitting the data so that the data can be allocated to this packet data connection.

Particularly if the mobile communication network is operated in a home-based routing configuration, the second gateway server 9 may be configured to establish packet data connections only to mobile communication devices having a local subscriber identification, i.e. a subscriber identification associated with the subnetwork 12 including the second gateway server 9. Connection requests of mobile communication devices having a non-local subscriber identification may be rejected. However, as explained above, the mobile communication device 4 may have a non-local subscriber identification.

Therefore, in order to enable the establishment of a connection via the second gateway server 9 for the mobile communication device 4, a local subscriber identification may be allocated to the mobile communication device 4. This local subscriber identification may be stored in the subscriber account of the user or in the special subscriber account of the M2M service provider in association to the non-local subscriber identification. In contrast to the real, non-local subscriber identification, the local subscriber identification may not be stored in the mobile communication device 4. In fact, it may even not be known to the mobile communication device 4 itself. Thus, the local subscriber identification corresponds to a virtual subscriber identification allocated to the mobile communication device 4.

When the proxy server 11 forwards the connection request to the second gateway server 9, it may translate the non-local subscriber identification of the mobile communication device 4, which is included in the connection request, into the local subscriber identification allocated to the mobile communication device 4 in the subscriber account of the user or in the special subscriber account. For this purpose, the proxy server 11 may retrieve the local subscriber identification from the subscriber database server 12 including the subscriber account or the subscriber database server 10 using the non-local subscriber identification included in the connection request.

As a consequence, the connection request forwarded to the second gateway server 9 includes the "virtual" local subscriber identification allocated to the mobile communication device 4 instead of the non-local subscriber identification of the mobile communication device 4. The connection request may then be processed in the second gateway server 9 to establish the packet data connection to the mobile communication device 4. In this process, the second gateway server may retrieve the account information included in the subscriber account of the user using the local subscriber identification allocated to the mobile communication device 1, which is included in the connection request, and establishes the packet data connection in accordance with this account information.

In further signaling traffic between the second gateway server 9 and the mobile communication device 4 or the routing server 7, the proxy server 12 may again translate the non-local subscriber identification into the virtual local subscriber identity and vice versa, if necessary.

Variations to the disclosed embodiments can be understood and effected by those skilled in the art in practicing the claimed invention, from a study of the drawings, the disclosure, as far as they fall within the scope of the appended claims. A computer program may be stored/distributed on a suitable medium, such as an optical storage medium or a solid-state medium, supplied together with or as part of other hardware, but may also be distributed in other forms, such as via the Internet or other wired or wireless telecommunication systems. Any reference signs in the claims should not be construed as limiting the scope.

## Claims

1. Mobile communication network (1) for routing data of at least one mobile communication device (4) of a user supporting data communication in at least two categories of data, a first category of data comprising machine-to-machine data and a second category of data comprising user data,
wherein the mobile communication network (1) comprises
a first gateway server (8) configured to establish a data connection for transmitting data between the mobile communication device (4) and a machine-to-machine service center (2), and
a second gateway server (9) configured to establish a data connection for transmitting user data between the mobile communication device (4) and a data network (3),
wherein the mobile communication network (1) further comprises a proxy server (11) configured to receive from the mobile communication device (4) a request for establishing a data connection for transmitting data and to check whether the mobile communication device (4) belongs to a predetermined group of mobile communication devices, and
wherein the proxy server (11) is configured to determine whether the data comprises data of the first or second category and to forward the request to the first gateway server (8) in case it is determined that the data comprises data of the first category or to the second gateway server (9) in case it is determined that the data comprises data of the second category, if the proxy server (11) has determined that the mobile communication device (4) belongs to the predetermined group of mobile communication devices, and
the proxy server (11) is configured to forward the request to the first gateway server (8) independent of the category of the data, if the proxy server (11) has determined that the mobile communication device (4) does not belong the predetermined group.

2. Mobile communication network (1) according to claim 1, wherein the predetermined group of mobile communication devices comprises mobile communication devices associated with at least two accounts of the mobile communication network (1).

3. Mobile communication network (1) according to claim 2, wherein the at least two accounts of the mobile communication network (1) comprise an account of a user of the mobile communication device and an account associated with the machine-to-machine service center (2).

4. Mobile communication network (1) according to one of the preceding claims, wherein the proxy server (11) is configured to determine whether the data comprises data of the first or second category on the basis of an access point name included in the request.

5. Mobile communication network (1) according to one of the preceding claims, wherein the mobile communication network (1) is configured to transmit a code word to a mobile communication unit of the user for input into the mobile communication device (4) and to associate the mobile communication device (4) with the account of the user upon receipt of the code word from the mobile communication device (4).

6. Mobile communication network (1) according to one of the preceding claims, wherein the mobile communication network (1) comprises several subnetworks (12, 13), wherein the request includes a non-local subscriber identification of the mobile communication device (4) not associated with a subnetwork (12) including the second gateway server (9) and wherein the proxy server (11) is configured to translate the non-local subscriber identification of the mobile communication device (4) into a local subscriber identification of the mobile communication device (4) associated with the subnetwork (12) including the second gateway server (9) when the proxy server (11) forwards the request to the second gateway server (9).

7. Mobile communication network (1) according to one of the preceding claims, wherein the mobile communication device (4) is integrated into a vehicle and wherein the machine-to-machine data particularly comprise telematics data.

8. Mobile communication network (1) according to one of the preceding claims, wherein the mobile communication device (4) is configured to be connected to a user device (5) and to receive the user data from the user device (5).

9. System comprising a mobile communication network (1) according to one of the preceding claims and further comprising the mobile communication device (4)

10. Method for establishing a data connection for at least one mobile communication device (4) of a user via a mobile communication network (1), the mobile communication device (4) supporting data communication in at least two categories, a first category comprising machine-to-machine data and a second category comprising user data,
the mobile communication network (1) comprising
a first gateway server (8) configured to establish a data connection for transmitting data between the mobile communication device (4) and a machine-to-machine service center (2), and
a second gateway server (9) configured to establish a data connection for transmitting data between the mobile communication device (4) and a data network (3), and
wherein the method comprises:
receiving a request for establishing a data connection for transmitting data in a proxy server (11),
the proxy server (11) checking whether the mobile communication device (4) belongs to a predetermined group of mobile communication devices,
the proxy server (11) further determining whether the data comprises data of the first or second category, and
the proxy server (11) forwarding the request to the first gateway server (8) in case it is determined that the data comprises date of the first category or to the second gateway server (9) in case it is determined that the data comprises data of the second category, if the proxy server (11) has determined that the mobile communication device (4) belongs to the predetermined group of mobile communication devices, and
the proxy server (11) forwarding the request to the first gateway server (8) independent of the category of the data, if the proxy server (11) has determined that the mobile communication device (4) does not belong the predetermined group.

11. Computer program comprising program code for instructing a computer device to perform a method as defined in claim 10 when the program code is executed in the computer device.

## Patentansprüche

1. Mobilkommunikationsnetzwerk (1) zum Routing von Daten wenigstens eines mobilen Kommunikationsgerät (4) eines Nutzers, das eine Datenkommunikation in wenigstens zwei Datenkategorien unterstützt, wobei eine erste Datenkategorie Maschine-zu-Maschine-Daten umfasst und eine zweite Datenkategorie Nutzerdaten umfasst,
wobei das Mobilkommunikationsnetzwerk (1) umfasst:
Einen ersten Gatewayserver (8), der dazu ausgestaltet ist, eine Datenverbindung zum Übertragen von Daten zwischen dem mobilen Kommunikationsgerät (4) und einem Maschine-zu-Maschine-Servicecenter (2) aufzubauen, und
einen zweiten Gateway-Server (9), der dazu ausgestaltet ist, eine Datenverbindung zum Übertragen von Nutzerdaten zwischen dem mobilen Kommunikationsgerät (4) und einem Datennetzwerk (3) aufzubauen,
wobei das Mobilkommunikationsnetzwerk (1) weiterhin einen Proxyserver (11) umfasst, der dazu ausgestaltet ist, von dem mobilen Kommunikationsgerät (4) eine Anforderung für den Aufbau einer Datenverbindung zum Übertragen von Daten zu empfangen und zu prüfen, ob das mobile Kommunikationsgerät (4) zu einer vorbestimmten Gruppe von mobilen Kommunikationsgeräten gehört, und
wobei der Proxyserver (11) dazu ausgestaltet ist, zu bestimmen, ob die Daten Daten der ersten oder zweiten Kategorie umfassen, und die Anforderung an den ersten Gateway-Server (8) weiterzuleiten, falls bestimmt wird, dass die Daten Daten der ersten Kategorie umfassen, oder an den zweiten Gateway-Server (9), falls bestimmt wird, dass die Daten Daten der zweiten Kategorie umfassen, wenn der Proxyserver (11) festgestellt hat, dass das mobile Kommunikationsgerät (4) zu der vorbestimmten Gruppe von mobilen Kommunikationsgeräten gehört, und
wobei der Proxyserver (11) dazu ausgestaltet ist, die Anforderung unabhängig von der Kategorie der Daten an den ersten Gateway-Server (8) weiterzuleiten, wenn der Proxyserver (11) festgestellt hat, dass das mobile Kommunikationsgerät (4) nicht zu der vorbestimmten Gruppe gehört.

2. Mobilkommunikationsnetzwerk (1) nach Anspruch 1, wobei die vorbestimmte Gruppe von mobilen Kommunikationsgeräten mobile Kommunikationsgeräte umfasst, die mit mindestens zwei Konten des mobilen Kommunikationsnetzes (1) assoziiert sind.

3. Mobilkommunikationsnetzwerk (1) nach Anspruch 2, wobei die mindestens zwei Konten des mobilen Kommunikationsnetzwerks (1) ein Konto eines Benutzers des mobilen Kommunikationsgeräts und ein dem Maschine-zu-Maschine-Servicecenter (2) assoziiertes Konto umfassen.

4. Mobilkommunikationsnetzwerk (1) nach einem der vorhergehenden Ansprüche, wobei der Proxyserver (11) dazu ausgestaltet ist, auf der Grundlage eines in der Anforderung enthaltenen Zugangspunktnamens zu bestimmen, ob die Daten Daten der ersten oder zweiten Kategorie umfassen.

5. Mobilkommunikationsnetzwerk (1) nach einem der vorhergehenden Ansprüche, wobei das Mobilkommunikationsnetzwerk (1) dazu ausgestaltet ist, ein Codewort zur Eingabe in das mobile Kommunikationsgerät (4) an eine mobile Kommunikationseinheit des Nutzers zu übertragen und das mobile Kommunikationsgerät (4) nach einem Empfang des Codeworts von dem mobilen Kommunikationsgerät (4) mit dem Konto des Benutzers zu assoziieren.

6. Mobilkommunikationsnetzwerk (1) nach einem der vorhergehenden Ansprüche, wobei das Mobilkommunikationsnetzwerk (1) mehrere Teilnetzwerke (12, 12) umfasst, wobei die Anforderung eine nicht-lokale Teilnehmeridentifikation des mobilen Kommunikationsgeräts (4) enthält, die nicht mit einem Teilnetzwerk (12) assoziiert ist, das den zweiten Gatewayserver (9) enthält, und wobei der Proxyserver (11) dazu ausgestaltet ist, die nicht-lokale Teilnehmeridentifikation des mobilen Kommunikationsgeräts (4) in eine lokale Teilnehmeridentifikation des mobilen Kommunikationsgeräts (4) zu übersetzen, die mit dem Teilnetzwerk (12) assoziiert ist, das den zweiten Gatewayserver (9) enthält, wenn der Proxyserver (11) die Anforderung an den zweiten Gatewayserver (9) weiterleitet.

7. Mobilekommunikationsnetzwerk (1) nach einem der vorhergehenden Ansprüche, wobei das mobile Kommunikationsgerät (4) in ein Fahrzeug integriert ist und wobei die Maschine-zu-Maschine-Daten insbesondere Telematikdaten umfassen.

8. Mobilkommunikationsnetzwerk (1) nach einem der vorhergehenden Ansprüche, wobei das mobile Kommunikationsgerät (4) dazu ausgebildet ist, mit einem Benutzergerät (5) verbunden zu werden und die Benutzerdaten von dem Benutzergerät (5) zu empfangen.

9. System umfassend ein Mobilkommunikationsnetzwerk (1) nach einem der vorhergehenden Ansprüche und weiterhin umfassend das mobile Kommunikationsgerät (4).

10. Verfahren zum Aufbauen einer Datenverbindung für wenigstens ein mobiles Kommunikationsgerät (4) eines Benutzers über ein Mobilkommunikationsnetzwerk (1), wobei das mobile Kommunikationsgerät (4) Datenkommunikation in wenigstens zwei Kategorien unterstützt, wobei eine erste Kategorie Maschine-zu-Maschine-Daten und eine zweite Kategorie Benutzerdaten umfasst,
wobei das Mobilkommunikationsnetzwerk (1) umfasst:
Einen ersten Gatewayserver (8), der dazu ausgestaltet ist, eine Datenverbindung zum Übertragen von Daten zwischen dem mobilen Kommunikationsgerät (4) und einem Maschine-zu-Maschine-Servicecenter (2) aufzubauen, und
einen zweiten Gatewayserver (9), der dazu ausgestaltet ist, eine Datenverbindung zum Übertragen von Nutzerdaten zwischen dem mobilen Kommunikationsgerät (4) und einem Datennetzwerk (3) aufzubauen, und
wobei das Verfahren die folgenden Schritte umfasst:
Empfangen einer Anforderung für den Aufbau einer Datenverbindung zur Übertragung von Daten in einem Proxy-Server (11),
der Proxyserver (11) prüft, ob das mobile Kommunikationsgerät (4) zu einer vorgegebenen Gruppe von mobilen Kommunikationsgeräten gehört,
der Proxy-Server (11) bestimmt weiterhin, ob die Daten Daten der ersten oder zweiten Kategorie umfassen, und
der Proxy-Server (11) leitet die Anforderung an den ersten Gatewayserver (8) weiterleitet, falls festgestellt wird, dass die Daten Daten der ersten Kategorie umfassen, oder an den zweiten Gatewayserver (9), falls festgestellt wird, dass die Daten Daten der zweiten Kategorie umfassen, falls der Proxyserver (11) festgestellt hat, dass die mobile Kommunikationsvorrichtung (4) zu der vorbestimmten Gruppe von mobilen Kommunikationsvorrichtungen gehört, und
der Proxyserver (11) leitet die Anfrage unabhängig von der Kategorie der Daten an den ersten Gatewayserver (8) weiter, wenn der Proxy-Server (11) festgestellt hat, dass das mobile Kommunikationsgerät (4) nicht zu der vorbestimmten Gruppe gehört.

11. Computerprogramm umfassend Programmcode, um eine Computervorrichtung anzuweisen, ein Verfahren nach Anspruch 10 durchzuführen, wenn der Programmcode in der Computervorrichtung ausgeführt wird.

## Revendications

1. Réseau de communication mobile (1) pour acheminer des données d'au moins un dispositif de communication mobile (4) d'un utilisateur, prenant en charge une communication de données dans au moins deux catégories de données, une première catégorie de données comprenant des données machine à machine et une seconde catégorie de données comprenant des données d'utilisateur,
dans lequel le réseau de communication mobile (1) comprend
un premier serveur passerelle (8) configuré pour établir une connexion de données pour émettre des données entre le dispositif de communication mobile (4) et un centre de service machine à machine (2), et
un second serveur passerelle (9) configuré pour établir une connexion de données pour émettre des données d'utilisateur entre le dispositif de communication mobile (4) et un réseau de données (3),
dans lequel le réseau de communication mobile (1) comprend en outre un serveur mandataire (11) configuré pour recevoir, à partir du dispositif de communication mobile (4), une demande d'établissement d'une connexion de données pour émettre des données et pour vérifier si le dispositif de communication mobile (4) appartient à un groupe prédéterminé de dispositifs de communication mobile, et
dans lequel le serveur mandataire (11) est configuré pour déterminer si les données comprennent des données de la première ou de la seconde catégorie et pour transférer la demande au premier serveur passerelle (8) dans le cas où il est déterminé que les données comprennent des données de la première catégorie ou au second serveur passerelle (9) dans le cas où il est déterminé que les données comprennent des données de la seconde catégorie, si le serveur mandataire (11) a déterminé que le dispositif de communication mobile (4) appartient au groupe prédéterminé de dispositifs de communication mobile, et
le serveur mandataire (11) est configuré pour transférer la demande au premier serveur passerelle (8) indépendamment de la catégorie des données, si le serveur mandataire (11) a déterminé que le dispositif de communication mobile (4) n'appartient pas au groupe prédéterminé.

2. Réseau de communication mobile (1) selon la revendication 1, dans lequel le groupe prédéterminé de dispositifs de communication mobile comprend des dispositifs de communication mobile associés à au moins deux comptes du réseau de communication mobile (1).

3. Réseau de communication mobile (1) selon la revendication 2, dans lequel les au moins deux comptes du réseau de communication mobile (1) comprennent un compte d'un utilisateur du dispositif de communication mobile et un compte associé au centre de service machine à machine (2).

4. Réseau de communication mobile (1) selon l'une des revendications précédentes, dans lequel le serveur mandataire (11) est configuré pour déterminer si les données comprennent des données de la première ou de la seconde catégorie sur la base d'un nom de point d'accès inclus dans la demande.

5. Réseau de communication mobile (1) selon l'une des revendications précédentes, dans lequel le réseau de communication mobile (1) est configuré pour émettre un mot de code vers une unité de communication mobile de l'utilisateur pour une entrée dans le dispositif de communication mobile (4) et pour associer le dispositif de communication mobile (4) au compte de l'utilisateur lors de la réception du mot de code à partir du dispositif de communication mobile (4).

6. Réseau de communication mobile (1) selon l'une des revendications précédentes, dans lequel le réseau de communication mobile (1) comprend plusieurs sous-réseaux (12, 12), dans lequel la demande inclut une identification d'abonné non local du dispositif de communication mobile (4) non associée à un sous-réseau (12) incluant le second serveur passerelle (9) et dans lequel le serveur mandataire (11) est configuré pour traduire l'identification d'abonné non local du dispositif de communication mobile (4) en une identification d'abonné local du dispositif de communication mobile (4) associée au sous-réseau (12) incluant le second serveur passerelle (9) lorsque le serveur mandataire (11) transfère la demande au second serveur passerelle (9).

7. Réseau de communication mobile (1) selon l'une des revendications précédentes, dans lequel le dispositif de communication mobile (4) est intégré dans un véhicule et dans lequel les données machine à machine comprennent en particulier des données télématiques.

8. Réseau de communication mobile (1) selon l'une des revendications précédentes, dans lequel le dispositif de communication mobile (4) est configuré pour être connecté à un dispositif utilisateur (5) et pour recevoir les données d'utilisateur à partir du dispositif utilisateur (5).

9. Système comprenant un réseau de communication mobile (1) selon l'une des revendications précédentes et comprenant en outre le dispositif de communication mobile (4).

10. Procédé d'établissement d'une connexion de données pour au moins un dispositif de communication mobile (4) d'un utilisateur via un réseau de communication mobile (1), le dispositif de communication mobile (4) prenant en charge une communication de données dans au moins deux catégories, une première catégorie comprenant des données machine à machine et une seconde catégorie comprenant des données d'utilisateur,
le réseau de communication mobile (1) comprenant
un premier serveur passerelle (8) configuré pour établir une connexion de données pour émettre des données entre le dispositif de communication mobile (4) et un centre de service machine à machine (2), et
un second serveur passerelle (9) configuré pour établir une connexion de données pour émettre des données d'utilisateur entre le dispositif de communication mobile (4) et un réseau de données (3), et
dans lequel le procédé comprend :
la réception d'une demande d'établissement d'une connexion de données pour émettre des données dans un serveur mandataire (11),
le serveur mandataire (11) vérifiant si le dispositif de communication mobile (4) appartient à un groupe prédéterminé de dispositifs de communication mobile,
le serveur mandataire (11) déterminant en outre si les données comprennent des données de la première ou de la seconde catégorie, et
le serveur mandataire (11) transférant la demande au premier serveur passerelle (8) dans le cas où il est déterminé que les données comprennent des données de la première catégorie ou au second serveur passerelle (9) dans le cas où il est déterminé que les données comprennent des données de la seconde catégorie, si le serveur mandataire (11) a déterminé que le dispositif de communication mobile (4) appartient au groupe prédéterminé de dispositifs de communication mobile, et
le serveur mandataire (11) transférant la demande au premier serveur passerelle (8) indépendamment de la catégorie des données, si le serveur mandataire (11) a déterminé que le dispositif de communication mobile (4) n'appartient pas au groupe prédéterminé.

11. Programme informatique comprenant un code de programme pour ordonner à un dispositif informatique de réaliser un procédé tel que défini selon la revendication 10 lorsque le code de programme est exécuté dans le dispositif informatique.
